# EUROPÄISCHE PATENTSCHRIFT

(11) **EP 0 928 552 B1**
(45) Veröffentlichungstag und Bekanntmachung des Hinweises auf die Patenterteilung: **07.08.2002**
(21) Anmeldenummer: 97941863.9
(22) Anmeldetag: 27.08.1997
(51) Int. Cl.: H05B 41/02, H05B 41/392

(54) **ANORDNUNG ZUM ERKENNEN DES ZUSTANDES EINER HOCHDRUCK-GASENTLADUNGSLAMPE BEIM EINSCHALTEN**
ARRANGEMENT FOR DETERMINING THE STATE OF A HIGH-PRESSURE GAS DISCHARGE LAMP ON SWITCHING-ON
SYSTEME PERMETTANT DE DETERMINER L'ETAT D'UNE LAMPE LUMINESCENTE A GAZ HAUTE PRESSION AU MOMENT DE LA MISE EN MARCHE

(30) Priorität: 26.09.1996 DE 29616655 U
(43) Veröffentlichungstag der Anmeldung: 14.07.1999
(73) Patentinhaber: ROBERT BOSCH GMBH, 70442 Stuttgart (DE)
(72) Erfinder: PREIS, Karl-Heinrich, D-77830 Bühlertal (DE); KOCH, Stefan, D-77833 Ottersweier (DE); ECKERT, Klaus, D-77770 Durbach Ebersweier (DE); DAMERAU, Ernst, D-72793 Pfullingen (DE)
(74) Vertreter: Dreiss, Fuhlendorf, Steimle & Becker
(86) Internationale Anmeldenummer: DE9701936
(87) Internationale Veröffentlichungsnummer: WO9814035

(56) Entgegenhaltungen:
- DE-A- 19 535 663
- DE-A- 19 536 644
- US-A- 4 240 009
- PATENT ABSTRACTS OF JAPAN vol. 014, no. 079 (E-0888), 14.Februar 1990 & JP 01 292796 A (TOSHIBA ELECTRIC EQUIP CORP), 27.November 1989,

## Beschreibung

### Stand der Technik

Die Erfindung geht aus von einer Anordnung zum Erkennen des Zustandes einer Hochdruck-Gasentladungslampe beim Einschalten anhand der Lampentemperatur, der im Oberbegriff des Anspruchs 1 definierten Gattung.

Aus US 42 40 009 ist eine Schaltung zum Betreiben einer Gasentladungslampe bekannt, welche die der Lampe zugeführte Leistung anhand einer Kennlinie ermittelt, einstellt und steuert. Das Steuergerät enthält eine Leistungsversorgungsschaltung. Diese wird mittels einer Spannungs-/Strom-Kennlinie gesteuert und geregelt, so daß die Lampe im Betrieb auf einer bestimmten, insbesondere konstanten Leistung gehalten wird. Bei dieser bekannten Schaltung wird dazu die Leistungsermittlung mittels eines Wattmeters durchgeführt, der die einer geregelten Inverterschaltung von einer Batterie zugeführte Leistung aus anliegender Spannung und dabei fließendem Strom ermittelt und daraus entsprechend der vorgegebenen Spannungs-/Strom-Kennlinie Steuerungssignale für die Inverterschaltung erzeugt. Bei Einhaltung konstanter Leistung für die Lampe liegt der jeweilige Betriebspunkt auf der sogenannten Leistungshyperbel.

Zur Steuerung beim Anlauf sowie beim Betrieb einer Hochdruck-Gasentladungslampe ist generell die Vedilis-Kurve als Strom/Spannungskurve im Sinne einer Sollwertkurve vorgegeben. Die Vedilis-Kurve ist in den "System Specifications for Field Test" des VEDILIS Eureka Project 273 auf Seite B 1/3 dargestellt und als Strom-/Spannungskennlinie für in Kraftfahrzeugen einzusetzende Gasentladungslampen vorgegeben. Dabei steht "Vedilis" als Abkürzung für "Vehicle Discharge Light System". Zur Regelung der Lampenleistung einer Gasentladungslampe wird danach in der Anlauf- bzw. Brennphase z.B. die Lampenspannung U gemessen und aus der Vedilis-Kurve der entsprechende, zur jeweiligen Lampenspannung U gehörige Lampenstrom I ermittelt. Dieser Lampenstrom I dient dann als Sollwert für den Stromregelkreis, mit dem die Lampenleistung auf einen konstanten Wert, z.B. 35 W geregelt wird. Dieses Vedilis-Kurve-Verfahren ist auch in der nachveröffentlichten DE-A-1,953,644 in Spalte 2, Zeile 39 bis Zeile 58 beschrieben.

Bei der aus dem Abstract JP-A-01,292796 bekannten Anordnung besteht der Zweck darin, die Lampenhelligkeit im wesentlichen konstant zu halten, auch wenn die Temperatur der Lampe sich ändert. Dazu wird bei abnehmender Lampenspannung, zwangsweise bedingt durch die steigende Lampentemperatur, der in der Lampe fließende Strom angehoben und die zugeführte Leistung so geregelt, daß die gewünschte Helligkeit bestehen bleibt. Diese hier erwähnte Lampentemperatur ist ganz offensichtlich diejenige Temperatur, die nach dem Einschalten und Hochfahren der Lampe im Betrieb entsteht, woraufhin sich die Lampenspannung zwangsweise ändert. Entgegen dem, was bei der Erfindung gemacht wird, ist diesem Dokument nicht zu entnehmen, dass überhaupt und wie der Lampenzustand bzw. die Temperatur der Lampe beim Einschalten festgestellt wird, und dass zusätzlich dann entsprechend dem ermittelten Ergebnis der Lichtanlauf durchgeführt wird. Dieses Dokument beinhaltet nur das auch in der eingangs genannten US 42 40 009 offenbarte Verfahren, nämlich den Lampenanlauf entsprechend einer Strom-/Spannungs-Kurve "Vedilis" zu fahren. In beiden Fällen wird entweder eine durch den maximalen Strom begrenzte Steuerung oder eine auf konstante Leistung begrenzte Steuerung entlang einer bestimmten Kennlinie angewandt. -
Dies hat absolut nichts mit der Zielsetzung und der Aufgabe vorliegender Erfindung zu tun, welche insbesondere anhand der Temperatur feststellt, wie der Lampenzustand zu Beginn einer Einschaltung der Lampe ist.

Generell ist es zur Nutzung einer Gasentladungslampe im Kraftfahrzeugscheinwerfer notwendig, möglichst die gewünschte Lichtmenge innerhalb kurzer Zeit nach dem Einschalten des Steuergerätes zur Verfügung zu stellen. Dies wird als schneller Lichtanlauf bezeichnet. Wie die o.g. Vedilis-Kurve vorgibt, kann dazu die Gasentladungslampe direkt nach dem Einschalten mit einer bestimmten Überlast betrieben werden. Diese Überlast wird dann nach Erreichen einer bestimmten Spannung in Abhängigkeit von der Lampenspannung zurückgefahren. Dieses Zurückfahren geschieht entlang der Kennlinie. Es ist klar, daß durch eine derartige Überlast die Lampe nicht zerstört oder in ihrer Lebensdauer beeinträchtigt werden darf. Diese Forderung ist für alle Betriebsbedingungen einzuhalten.

Nach dem Zünden der Hochdruck-Gasentladungslampe wird diese also mit einer definierten Überlast beim schnellen Lichtanlauf betrieben, damit sie möglichst rasch die gewünschte Lichtmenge abgibt. Für das Wiedereinschalten, generell für das Einschalten der Lampe, ist es von entscheidender Bedeutung, deren Zustand, insbesondere die Temperatur der Lampe zu kennen. Der Lichtanlauf wird besser, wenn je nach der vorherrschenden Lampentemperatur die richtige Überlast eingeprägt wird. Größe und Dauer der Überlast sind vom Zustand der Lampe abhängig. War die Lampe beispielsweise lange ausgeschaltet und ist daher kalt, dann muß sie über längere Zeit mit einer größeren Überlast betrieben werden, als wenn sie nur kurz ausgeschaltet war und somit beim Wiedereinschalten noch heiß ist.

Zur Feststellung des Zustands einer Hochdruck-Gasentladungslampe wurde bereits vorgeschlagen, über das Laden und Entladen eines besonderen Kondensators indirekt auf die Temperatur zu schließen. Bei eingeschalteter Lampe wird der Kondensator aufgeladen, bei ausgeschalteter Lampe entladen. Über die Spannung am Kondensator kann auf die Ein- und Ausschaltzeit und damit auf den Zustand der Lampe geschlossen werden. Nachteilig ist hierbei der zusätzliche hardwaremäßige Aufwand für den Kondensator und andere benötigte Bauteile. Die Zeitkonstante ist groß und liegt im Sekundenbereich, beispielsweise von ca. 10 s.

Gemäß einer weiteren vorgeschlagenen Möglichkeit läßt man das Steuergerät auch bei ausgeschalteter Lampe weiterlaufen, um über die Messung der Ein- und Ausschaltzeit die Lampentemperatur zu bestimmen. Diese Möglichkeit macht es erforderlich, daß das Steuergerät dauernd mit Energie versorgt und daher ggf. mit einem besonderen Anschluß versehen werden muß. Auch hier liegt der Nachteil in dem zusätzlichen Vorsehen geeigneter Bauteile und Energie.

### Vorteile der Erfindung

Die erfindungsgemäße Anordnung mit den kennzeichnenden Merkmalen des Anspruchs 1 hat demgegenüber den Vorteil des geringeren Bauteilaufwandes bei gleich guten, wenn nicht wesentlich besseren Ergebnissen der Bestimmung des Lampenzustandes beim Einschalten. Der Zustand der Hochdruck-Gasentladungslampe kann bestimmt werden, obwohl nicht direkt bekannt ist, wie lange die Lampe eingeschaltet und danach ausgeschaltet war. Das Steuergerät muß also während des ausgeschalteten Zustandes der Lampe nicht eingeschaltet bleiben, um die Ausschaltzeit zu bestimmen.

Gemäß der Erfindung ist prinzipiell zur Erkennung des Lampenzustandes beim Einschalten vorgesehen, daß das Steuergerät einen definierten Strom in die Lampe einprägt und daß es den dabei auftretenden Spannungsabfall, die Lampenspannung, mißt und auswertet, oder alternativ das Steuergerät eine definierte Spannung an die Lampe anlegt und daß es den dabei fließenden Lampenstrom mißt und auswertet, und bei beiden Alternativen das Steuergerät den Lichtanlauf mit einer definierten Überlast entsprechend dem festgestellten Zustand der Lampe durchführt.

Durch die in den weiteren Ansprüchen niedergelegten Maßnahmen sind vorteilhafte Weiterbildungen und Verbesserungen der im Anspruch 1 angegebenen Meß- und Auswertanordnung möglich.

Gemäß einer für beide Alternativen besonders zweckmäßigen und vorteilhaften Ausgestaltung der Erfindung führt das Steuergerät das Einprägen des Stromes sowie die zugehörige Spannungsmessung bzw. das Anlegen der Spannung sowie die zugehörige Strommessung und das jeweilige Auswerten jeweils kurz nach dem Einschalten der Lampe, insbesondere unmittelbar nach dem Zünden der Lampe, durch. Es ist besonders zweckmäßig, daß nach einer weiteren Ausgestaltung der Erfindung das Steuergerät die Meßvorgänge im Lastkreis der Lampe durchführt, da es somit keine Verfälschungen und keine zusätzlich notwendigen Bauteile erfordert. In vorteilhafter Weise speichert das Steuergerät das Meßergebnis für den jeweiligen Lichtanlauf.

Entsprechend einer vorteilhaften Weiterbildung der Erfindung führt das Steuergerät die Meß- und Auswertvorgänge mehrmals, insbesondere kurz hintereinander, durch und bildet aus den Ergebnissen einen konsolidierten Wert. Gemäß einer zweckmäßigen Ausgestaltung dieser Weiterbildung ist vorgesehen, daß das Steuergerät als konsolidierten Wert den Mittelwert bildet. In vorteilhafter Weiterbildung wird von dem Steuergerät der konsolidierte Wert bzw. der Mittelwert gespeichert. Eine besonders vorteilhafte Ausgestaltung dieser Weiterbildung sieht vor, daß das Steuergerät die Meß- und Auswertvorgänge derart vornimmt, daß der Lampenzustand stufenlos, d.h. kontinuierlich erkennbar ist.

In weiterer, zweckmäßiger Ausgestaltung der Erfindung ist es auch möglich, daß das Steuergerät den Verlauf der Meßgröße, insbesondere deren Steigung, auswertet, um den aktuellen Lampenzustand festzustellen.

Eine besonders zweckmäßige, vorteilhafte und flexible Ausgestaltung der Erfindung beinhaltet, daß im Steuergerät ein Mikrokontroller mit Speicher vorgesehen ist, mit dessen Hilfe die Meßvorgänge steuerbar und die Meßergebnisse speicherbar sind.

Die erfindungsgemäße Anordnung ist in besonders vorteilhafter und zweckmäßiger Weise bei in Kraftfahrzeugen verwendeten Hochdruck-Gasentladungslampen verwendbar.

### Zeichnung

Die Erfindung ist anhand eines in der Zeichnung dargestellten Ausführungsbeispiels in der nachfolgenden Beschreibung näher erläutert. Es zeigen:
- Fig. 1: schematisch ein Blockschaltbild der erfindungsgemäßen Anordnung, und
- Fig. 2: schematisch den Verlauf der an der Lampe gemessenen Spannung über der Zeit t bei kalter und warmer Hochdruck-Gasentladungslampe.

### Beschreibung des Ausführungsbeispiels

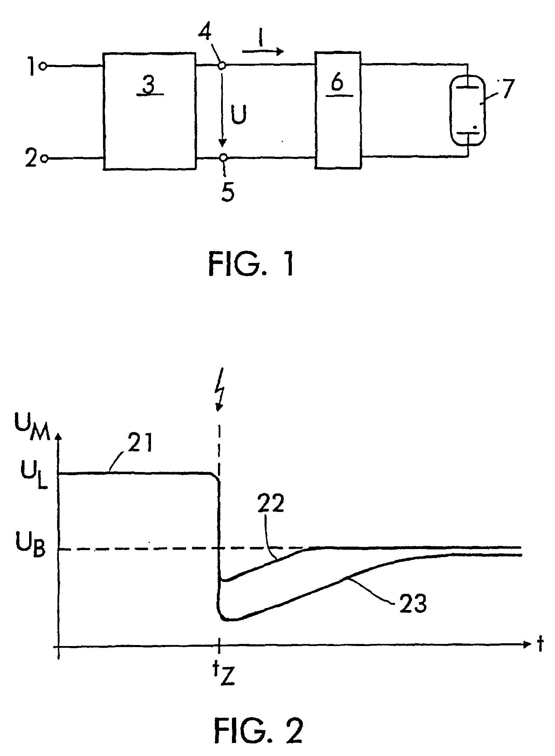

Die in Fig. 1 dargestellte Anordnung enthält ein Steuergerät 3, dem an seinen Eingangsklemmen 1 und 2 die notwendige Eingangsenergie beispielsweise vom Bordnetz oder der Batterie eines Kraftfahrzeuges zugeführt wird. An den Ausgangsklemmen 4 und 5 liefert das Steuergerät die für das Zünden durch eine Zündvorrichtung 6 einer Hochdruck-Gasentladungslampe benötigten Ströme I und Spannungen U. Diese Werte sind je nach dem Betriebszustand der Lampe unterschiedlich. Es sei jedoch darauf verwiesen, daß diese Werte bis und vor dem Zünden noch gleich sind.

In Fig. 2 ist schematisch der Verlauf der an der Lampe 7 gemessenen Spannung U_{M} über der Zeit t bei kalter und warmer Hochdruck-Gasentladungslampe 7 dargestellt. Die erfindungsgemäß gestaltete Anordnung beinhaltet, daß das Steuergerät 3 einen definierten Strom I in die Lampe 7 einprägt und daß es den dabei auftretenden Spannungsabfall U, beispielsweise an den Klemmen 4 und 5 mißt und auswertet, oder alternativ das Steuergerät 3 eine definierte Spannung an die Lampe 7 anlegt und daß es den dabei aus der Klemme 4 fließenden Lampenstrom mißt und auswertet. Das Steuergerät 3 steuert dann den Lichtanlauf entsprechend dem festgestellten Zustand der Lampe. Zweckmäßigerweise wird dieser Meßvorgang jeweils kurz nach dem Einschalten und Zünden der Lampe 7 an einer bestimmten Stelle vorgenommen. Vorteilhaft ist auch, daß die Spannungs- und Strommessung im Lastkreis der Lampe 7 durchgeführt wird, wodurch keine Verfälschung der Ergebnisse auftritt.

Das Steuergerät 3 speichert das von ihm ermittelte Meßergebnis für den jeweiligen Lichtanlauf. In besonders vorteilhafter Weiterbildung kann das Steuergerät 3 mehrere Meßvorgänge, beispielsweise vier, unmittelbar nacheinander wiederholen und daraus einen konsolidierten Wert, insbesondere den Mittelwert bilden. Dieser quasi gesicherte Mittelwert wird dann gespeichert und für die weitere Auswertung bereitgehalten.

Gemäß einer anderen Ausgestaltung des Steuergerätes ist es auch möglich, die Meß- und Auswertvorgänge mehrmals, insbesondere kurz hintereinander, durchzuführen und ggf. aus den Ergebnissen einen speicherbaren Mittelwert zu bilden. Alternativ ist es auch möglich, die Meß- und Auswertvorgänge derart vorzunehmen, daß der Lampenzustand stufenlos d.h. kontinuierlich erkennbar ist. In weiterer Ausgestaltung, die von der gezielten Einsatzweise der erfindungsgemäßen Anordnung abhängig ist, ist es alternativ oder additiv möglich, daß vom Steuergerät 3 der Verlauf der Meßgröße, insbesondere deren Steigung, ausgewertet wird, um den aktuellen Lampenzustand festzustellen. Entsprechend einer sehr flexiblen und vorteilhaften Ausgestaltung der erfindungsgemäßen Anordnung ist das Steuergerät 3 ein mit einem Mikrokontroller mit Speicher versehen, mit dessen Hilfe die Meßvorgänge steuerbar und die Meßergebnisse speicherbar sind.

Die Arbeitsweise der erfindungsgemäßen Anordnung kann nun so aussehen, daß durch Steuergerät 3 und Zündvorrichtung 6 die Zündung der Lampe 7 eingeleitet wird. Die Lampe zündet, wie in Fig. 2 dargestellt, zum Zeitpunkt t_{z}. Dabei geht die Spannung U_{M} vom Leerlaufwert U_{L} 21 auf einen niedrigeren Wert unterhalb der Brennspannung U_{B} der Lampe 7 zurück. Ist die Lampe nicht lange abgeschaltet gewesen und daher noch warm oder heiß, dann ist der Rückgang der Spannung nicht so groß, wie es durch den Kurvenabschnitt 22 dargestellt ist. In diesem Fall wird auch die Brennspannung U_{B} in relativ kurzer Zeit wieder erreicht. Ist die Lampe beim Einschalten kalt gewesen, dann ist der Rückgang der Spannung wesentlich größer, wie es durch den Kurvenabschnitt 23 dargestellt ist. In diesem Fall wird die Brennspannung U_{B} erst nach relativ langer Zeit erreicht.

Anstelle der Einprägung eines Stromes kann alternativ auch das Anlegen einer vorherbestimmten Spannung vorgenommen werden und der sich in der Lampe 7 einstellende Strom, der ja dann auch abhängig von der Lampentemperatur ist, gemessen werden. Auch aus diesem Wert wird dann auf die Lampentemperatur, den Zustand der Lampe geschlossen.

Nach erfolgter Zündung wird ein konstanter Strom definierter Größe eingespeist. Es wird vom Steuergerät 3 die Spannung der Lampe durch Messung bestimmt. Aus der gemessenen bzw. bestimmten Spannung wird auf die Lampentemperatur geschlossen. Bei niedriger Meßspannung U_{M} wird auf eine kalte Lampe mit relativ niedriger Temperatur geschlossen, wie es dem Kurvenabschnitt 23 entspricht und bei hoher Meßspannung U_{M} auf eine heiße Lampe mit hoher Temperatur. Die Brennspannung U_{B} kann für jede Lampe 7 leicht unterschiedlich sein und es ist daher besonders zweckmäßig, wenn dieser Wert als Lernwert gespeichert ist und bei der Bestimmung der Lampentemperatur Eingang und Berücksichtigung findet.

Die so ermittelten Werte für die Temperatur der Lampe 7 finden also Eingang in die Leistungsregelung der Lampe 7 und dienen dabei der optimalen Regelung des schnellen Lichtanlaufs, ohne daß die Lampe oder andere Teile der Anlage überbeansprucht werden. Dabei sind in vorteilhafter Weise bei Verwendung eines auch aus anderen Gründen vorgesehenen Mikrokontrollers für die erfindungsgemäße Anordnung keine zusätzlichen Bauelemente notwendig.

## Patentansprüche

1. Anordnung zum Erkennen des Zustandes einer Hochdruck-Gasentladungslampe (7) beim Einschalten anhand der Lampentemperatur, mit einem Steuergerät (3) zur Steuerung und zur Versorgung der Lampe (7) mit Energie,
**dadurch gekennzeichnet, daß**
das Steuergerät (3)
- entweder einen definierten Strom (I) in die Lampe (7) einprägt und den dabei auftretenden Spannungsabfall (U) mißt und auswertet
- oder
das Steuergerät (3) eine definierte Spannung (U) an die Lampe (7) anlegt und den dabei fließenden Lampenstrom (I) mißt und auswertet
und daß
das Steuergerät (3) den Lichtanlauf mit einer definierten Überlast entsprechend dem festgestellten Zustand der Lampe (7) durchführt.

2. Anordnung nach Anspruch 1, **dadurch gekennzeichnet, daß** das Steuergerät (3) das Einprägen des Stromes (I) sowie die zugehörige Spannungsmessung bzw. das Anlegen der Spannung (U) sowie die zugehörige Strommessung und das jeweilige Auswerten jeweils kurz nach dem Einschalten der Lampe (7), insbesondere unmittelbar nach dem Zünden (t₂) der Lampe (7), durchführt.

3. Anordnung nach Anspruch 1 oder 2, **dadurch gekennzeichnet, daß** das Steuergerät (3) das Meßergebnis für den jeweiligen Lichtanlauf speichert.

4. Anordnung nach Anspruch 1, 2 oder 3, **dadurch gekennzeichnet, daß** das Steuergerät (3) die Meßvorgänge im Lastkreis der Lampe (7) durchführt.

5. Anordnung nach einem der vorigen Ansprüche, **dadurch gekennzeichnet, daß** das Steuergerät (3) die Meß- und Auswertvorgänge mehrmals, insbesondere kurz hintereinander, durchführt und aus den Ergebnissen einen konsolidierten Wert bildet.

6. Anordnung nach Anspruch 5, **dadurch gekennzeichnet, daß** das Steuergerät (3) als konsolidierten Wert den Mittelwert bildet.

7. Anordnung nach Anspruch 5 oder 6, **dadurch gekennzeichnet, daß** das Steuergerät (3) den konsolidierten Wert bzw. den Mittelwert speichert.

8. Anordnung nach Anspruch 5, 6 oder 7 **dadurch gekennzeichnet, daß** das Steuergerät (3) die Meß- und Auswertvorgänge derart vornimmt, daß der Lampenzustand stufenlos, d.h. kontinuierlich erkennbar ist.

9. Anordnung nach einem der Ansprüche 5 bis 8, **dadurch gekennzeichnet, daß** das Steuergerät (3) den Verlauf der Meßgröße, insbesondere deren Steigung, auswertet, um den aktuellen Lampenzustand festzustellen.

10. Anordnung nach einem der vorigen Ansprüche, **dadurch gekennzeichnet, daß** im Steuergerät (3) ein Mikrokontroller mit Speicher vorgesehen ist, mit dessen Hilfe die Meßvorgänge steuerbar und die Meßergebnisse speicherbar sind.

11. Anordnung nach einem der vorigen Ansprüche, **dadurch gekennzeichnet, daß** sie bei in Kraftfahrzeugen verwendeten Hochdruck-Gasentladungslampen (7) verwendbar ist.

## Claims

1. Arrangement for detecting the state of a high-pressure gas discharge lamp (7) when switching on, with the aid of the lamp temperature, having a control unit (3) for controlling and supplying power to the lamp (7), **characterised in that**
the control unit (3)
- either injects a defined current (I) into the lamp, and measures and evaluates the voltage drop (U) which occurs in this case,
- or
the control unit (3) applies a defined voltage (U) to the lamp (7), and measures and evaluates the lamp current (I) which flows in this case,
and **in that**
the control unit (3) starts up the light emission with a defined overload in accordance with the identified state of the lamp (7).

2. Arrangement according to Claim 1, **characterised in that** the control unit (3) carries out the injection of the current (I) and the associated voltage measurement, or the application of the voltage (U) and the associated current measurement, as well as the respective evaluation, in each case shortly after the lamp (7) has been switched on, in particular immediately after the ignition (t_{z}) of the lamp (7).

3. Arrangement according to Claim 1 or 2, **characterised in that** the control unit (3) stores the measurement result for the respective start-up of the light emission.

4. Arrangement according to Claim 1, 2 or 3, **characterised in that** the control unit (3) carries out the measurement procedures in the load circuit of the lamp (7).

5. Arrangement according to one of the preceding claims, **characterised in that** the control unit (3) carries out the measurement and evaluation procedures a plurality of times, in particular in rapid succession, and forms a consolidated value from the results.

6. Arrangement according to Claim 5, **characterised in that** the control unit (3) takes the average as the consolidated value.

7. Arrangement according to Claim 5 or 6, **characterised in that** the control unit (3) stores the consolidated value, or the average.

8. Arrangement according to Claim 5, 6 or 7, **characterised in that** the control unit (3) performs the measurement and evaluation procedures in such a way that the lamp state can be detected without interruption, i.e. continuously.

9. Arrangement according to one of Claims 5 to 8, **characterised in that** the control unit (3) evaluates the profile of the measured quantity, in particular its slope, in order to identify the instantaneous lamp state.

10. Arrangement according to one of the preceding claims, **characterised in that** a microcontroller with a memory, with the aid of which the measurement procedures can be controlled and the measurement results can be stored, is provided in the control unit (3).

11. Arrangement according to one of the preceding claims, **characterised in that** it can be used with high-pressure gas discharge lamps (7) used in motor vehicles.

## Revendications

1. Dispositif pour détecter l'état d'une lampe à décharge de gaz à haute pression (7) lors de son branchement à l'aide de la température de la lampe comprenant un appareil de commande (3) qui commande et alimente la lampe (7) en énergie,
**caractérisé en ce que**
l'appareil de commande (3) soit applique une intensité déterminée (I) à la lampe (7) et mesure ensuite la chute de tension produite (U) et exploite ce résultat,
ou
l'appareil de commande (3') applique une tension définie (U) à la lampe (7) et mesure l'intensité (I) du courant traversant la lampe et exploite cette information,
et
l'appareil de commande (3) effectue l'amorçage de lumière avec une surcharge définie correspondant à l'état constaté de la lampe (7).

2. Dispositif selon la revendication 1,
**caractérisé en ce que**
l'appareil de commande (3) applique l'intensité (I) et mesure la tension correspondante ou applique la tension (U) et mesure le courant correspondant et exploite les résultats juste avant de brancher la lampe (7) notamment directement après le branchement (t_{z}) de la lampe (7).

3. Dispositif selon l'une quelconque des revendications 1 et 2,
**caractérisé en ce que**
l'appareil de commande (3) enregistre le résultat de la mesure pour l'amorçage de lumière.

4. Dispositif selon l'une quelconque des revendications 1, 2, 3,
**caractérisé en ce que**
l'appareil de commande (3) effectue des opérations de mesure dans le circuit de charge de la lampe (7).

5. Dispositif selon l'une quelconque des revendications précédentes,
**caractérisé en ce que**
l'appareil de commande (3) effectue les opérations de mesure et de traitement plusieurs fois notamment de façon rapprochée les unes après les autres et ne forme aucune valeur consolidée à partir des résultats.

6. Dispositif selon la revendication 5,
**caractérisé en ce que**
l'appareil de commande (3) forme comme valeur consolidée, la valeur moyenne.

7. Dispositif selon l'une quelconque des revendications 5 et 6,
**caractérisé en ce que**
l'appareil de commande (3) enregistre la valeur consolidée ou la valeur moyenne.

8. Dispositif selon l'une quelconque des revendications 5, 6, 7,
**caractérisé en ce que**
l'appareil de commande (3) effectue les opérations de mesure et de traitement pour reconnaître en continu l'état de la lampe.

9. Dispositif selon l'une quelconque des revendications 5 à 8,
**caractérisé en ce que**
l'appareil de commande (3) exploite la courbe des grandeurs de mesure notamment leur pente pour déterminer l'état actuel de la lampe.

10. Dispositif selon l'une quelconque des revendications précédentes,
**caractérisé en ce que**
l'appareil de commande (3) comporte un microcontrôleur avec une mémoire à l'aide duquel on commande des opérations de mesure et on enregistre les résultats.

11. Dispositif selon l'une quelconque des revendications précédentes,
**caractérisé par**
son application à une lampe à décharge de gaz à haute pression (7) équipant un véhicule automobile.
